# EUROPÄISCHE PATENTSCHRIFT

(11) **EP 1 784 296 B1**
(45) Veröffentlichungstag und Bekanntmachung des Hinweises auf die Patenterteilung: **21.11.2012**
(21) Anmeldenummer: 05756835.4
(22) Anmeldetag: 21.06.2005
(51) Int. Cl.: B29C 45/18, B29C 45/54, B29C 45/63, B29C 47/10

(54) **VORRICHTUNG ZUR HERSTELLUNG VON PET-PREFORMS**
DEVICE FOR PRODUCING INJECTION MOLDED PET-PREFORMS
DISPOSITIF POUR FABRIQUER DES PET-PREFORMES MOULEES PAR INJECTION

(30) Priorität: 27.08.2004 DE 102004041689
(43) Veröffentlichungstag der Anmeldung: 16.05.2007
(73) Patentinhaber: KraussMaffei Technologies GmbH, 80997 München (DE); KraussMaffei Berstorff GmbH, 30625 Hannover (DE)
(72) Erfinder: FISCHBACH, Gunther, 80997 München (DE); LIEBHOLD, Jens, 31303 Burgdorf (DE); BERNDT, Markus, 30794 Wennigsen (DE); ZIMMET, Rainer, 74382 Neckarwestheim (DE); SIEVERDING, Matthias, 85250 Altomünster (DE)
(74) Vertreter: Wilhelm, Ludwig
(86) Internationale Anmeldenummer: PCT/EP2005/052870
(87) Internationale Veröffentlichungsnummer: WO 2006/024553

(56) Entgegenhaltungen:
- WO-A-00/58072
- WO-A-86/06321
- US-A- 5 968 429
- PATENT ABSTRACTS OF JAPAN Bd. 2000, Nr. 16, 8. Mai 2001 (2001-05-08) & JP 2001 018223 A (UTSUMI KIKAKU KK), 23. Januar 2001 (2001-01-23)

## Beschreibung

Die Erfindung betrifft eine Vorrichtung zur Herstellung von PET-Preforms, mit einem Extruder zur Aufbereitung und Plastifizierung von vorzugsweise in Granulatform befindlichem PET-Material, mit einem Kolbenaggregat zum Weiterverarbeiten des PET-Materials, und mit einem PET-Preform-Werkzeug, in das das aufgeschmolzene PET-Material mittels des Kolbenaggregats eingeschossen wird.

Aus der gattungsbildenden EP0538286B1 und der zugehörigen Anmeldung WO-A-92/00838 ist eine Vorrichtung zur Herstellung von Spritzgussteilen bekannt, wobei ein Extruder zur Aufbereitung und/oder Plastifizierung von vorzugsweise in Granulatform befindlichem Materials eingesetzt wird, wobei ein Transferspeicher zur Aufnahme von aufbereitetem und/oder plastifiziertem Material verwendet wird und wobei ein Kolbenaggregat zum Weiterverarbeiten des Materials vorgesehen ist.

Die WO-A-86/06321 offenbart eine Vorrichtung zur Herstellung von Spritzgussteilen, wobei ein Doppelschneckenextruder mangels eines Transferspeichers diskontinuierlich betrieben wird. Der Doppelschneckenextruder schmilzt Material auf, das in eine Einspritzkammer gefördert wird und dort einen Einspritzkolben zurückbewegt. Wenn genügend Material produziert ist, stoppt der Doppelschneckenextruder die Produktion von Schmelze.

Bei der Herstellung von PET-Preforms im Spritzgießverfahren werden im Allgemeinen Einschneckenextruder zum Plastifizierten von Materialen, insbesondere von Kunststoffgranulaten, eingesetzt. Das plastifizierte Material wird zur Weiterverarbeitung mit einem Kolbenaggregat - Shot-Pot - verspritzt oder direkt mit einer axial verschiebbaren Schnecke eingespritzt. Da PET hygroskopisch ist und gebundene Feuchtigkeit hydrolytischen Polymerkettenabbau verursacht, wird das Material, insbesondere wenn es in Granulatform vorliegt, aufwendigst vorgetrocknet. Beispielhaft für diesen Stand der Technik sei auf die nachveröffentlichte WO2004/073953A1 hingewiesen, in der außerdem die Zugabe von Acetaldehyd-Blockern (AA-Blocker) vorgeschlagen wird.

Bei der Vortrocknung wird elektrisch oder mit Gasbrennern erwärmte Luft in einem großvolumigen, isolierten Vorratsbehälter eingebracht. Dabei wird das Material entfeuchtet und erfährt eine Temperaturerhöhung. Bei dieser Einschneckenplastifizierung mit Vortrocknung ist der Energiebedarf gegenüber der Temperaturerhöhung des Materials deutlich erhöht, in der Regel 0,55 kWh/kg. Darüber hinaus benötigen die Trocknungsanlagen erheblichen Bauraum, der zu einer beträchtlichen Vergrößerung der Vorrichtung zur Herstellung von Spritzgussteilen in vertikaler Richtung führt.

Ein anderes Verfahren zur Herstellung von PET-Preforms mit einem niedrigen Acetaldehyd-Gehalt ist aus der US 5,968,429 bekannt. Bei diesem Verfahren wird zur Erzielung eines niedrigen Acetaldehyd-Gehalts nach dem sogenannten "melt-to-mold"-Prinzip vorgegangen. Dabei wird in einem Polykondensationsreaktor erzeugte PET-Schmelze direkt in einen Extruder zu Weiterverarbeitung eingegeben.

Ferner ist es bekannt, das PET-Material, insbesondere PET-Granulat und Recyclat mit einem unterfütterten Doppelschneckenextruder ungetrocknet bei Anwendung geeigneter Verfahrensteile und einer geeigneten Vakuumextraktion zu Folien und Fasern zu verarbeiten. Beispielhaft wird auf die EP 1 226 922 A1 verwiesen. Eine solche Methode der Plastifizierung ohne Vortrocknung kann allerdings in bestimmten Gebieten, wie beispielsweise PET-Preforms, nicht angewendet werden, da Bedenken bezüglich des hydrolytischen Abbaus und der möglichen Erhöhung des Acetaldehyd-Gehalts - AA-Gehaits - in der Schmelze bestehen. Ein niedriger AA-Gehalt ist jedoch ein wichtiges Leistungsmerkmal von Preform-Anlagen, da die überwiegende Mehrzahl der produzierten Preforms zur Abfüllung von Wasser und CSDs - Carbonated Soft Drinks - eingesetzt wird. Ein hoher AA-Gehalt wirkt sich dabei störend auf den Geschmack der Getränken aus.

Die JP2001018223A offenbart die Herstellung von Polyester-Folien aus vorgetrocknetem PET-Recyclat-Material.

Ferner ist bei der Verwendung eines Doppelschneckenextruders zur Herstellung von PET-Preforms problematisch, dass die Synchronisation des zyklischen Betriebs einer Spritzgießmaschine und des stetig laufenden Doppelschneckenextruders. Bereits beim Einsatz von Doppelschneckencompoundern im integrierten Injection-Compounder ist erkennbar, dass die Verbindung dieser Maschinen eine Vorratsvorrichtung zwischen Extruder und Shot-Pot erforderlich macht.

Es ist also die Herstellung von PET-Preforms auf Spritzgießmaschinen bekannt, die mit einer Einschnecke als Plastifiziereinheit ausgerüstet sind. Das PET wird dazu über mehrere Stunden auf eine Restfeuchte von ca. 20 ppm vorgetrocknet, in der Einschnecke plastifiziert und zu Preformlingen verspritzt. Müssen Produkte verarbeitet werden, die irgendwelche Zusatzstoffe enthalten, müssen diese in einem vorgeschalteten Compoundierprozess eingearbeitet werden.

Für die Herstellung von Preforms für Milchflaschen, Saftflaschen oder ähnliche Anwendungen, aber auch verschiedene Spritzgussteile müssen diese bestimmte Barriereeigenschaften ausweisen, um eine Veränderung des Inhalts zu verhindern, wie dies bei der Diffusion von Inhaltsstoffen aus den Spritzgussteilen oder aber Eindringen von Stoffen erfolgt. Solche Barriereeigenschaften können beispielsweise als Schutz vor Fotooxidation, UV-Licht oder Sauerstoffeinwirkung dienen. Eine Verarbeitung solcher Zusatzstoffe ist heute nicht oder nicht in ausreichender Qualität auf einem Einschneckenextruder möglich. Es können daher lediglich Produkte für die Anwendung verarbeitet werden, bei denen in einem vorgeschalteten Compoundierschritt diese Einarbeitung durchgeführt wurde. Selbst das Einarbeiten eines 50%igen Titandioxid - TiO₂-PET-Masterbatches - zur Erzielung eines 10%gen TiO₂-Anteil in einer Milchflasche, erforderlich für ausreichende O₂-Barriereeigenschaften ist wegen der unzureichenden Mischwirkung eines Einschneckenextruders nicht möglich. Pulverförmiges TiO₂, zumindest in der erforderlichen Menge, kann mit einem Einschneckenextruder nicht verarbeitet werden. Eine andere Möglichkeit zum Schutz des Inhalts von solchen Spritzgussteilen besteht in dem Aufbringen einer Barriereschicht in einem zusätzlichen Verarbeitungsschritt. Dies erfordert jedoch zusätzliche Anlagen, ist zeitlich aufwendig und somit kostenintensiv.

Der vorliegenden Erfindung liegt daher die Aufgabe zugrunde, eine Vorrichtung zur Herstellung von PET-Preforms anzugeben, bei der eine energiesparende, platzsparende, materialschonende sowie universell einsetzbare Produktion von PET-Preforms mit unterschiedlichsten Eigenschaften sowie mit einem niedrigen AA-Gehalt ermöglicht ist.

Erfindungsgemäß wird die voranstehende Aufgabe durch die Vorrichtung zur Herstellung von PET-Preforms des Patentanspruchs 1 gelöst. Danach ist die in Rede stehende Vorrichtung derart ausgestaltet und weitergebildet, dass der Extruder als kontinuierlich betreibbarer Doppelschneckenextruder ausgestaltet ist, dass zur Adaption des kontinuierlichen Extrusionsprozesses an den zyklischen Spritzgießprozess ein Transferspeicher zur Aufnahme von aufbereitetem und plastifiziertem PET-Material vorgesehen ist, dass der Extruder mindestens zwei Prozesszonen aufweist, und dass mindestens zwei Prozesszonen als Entgasungszonen ausgestaltet sind.

In erfindungsgemäßer Weise ist erkannt worden, dass bei Verwendung eines Doppelschneckenextruders mit zweifacher Vakuumextraktion und einem geeigneten Verfahrensteil für die PET-Plastifizierung sowie einer Verbindung der Direktplastifizierung über ein Zwischenteil mit dem Shot-Pot einer PET-Preform-Spritzgießmaschine, eine Herstellung von PET-Preforms in besonders guter Qualität ohne eine aufwendige Vortrocknung möglich ist. Hierbei werden einerseits, durch das Entfallen der Vortrocknung, Energiekosten eingespart. Anderseits ist aufgrund der fehlenden Trocknungsanlage ein komprimierter Bau der Vorrichtung möglich, wobei ein niedriger AA-Gehalt der Kunststoffteile ermöglicht ist. Die bei bekannten Anlagen benötigte Energie von etwa 0.55 kWh/kg PET zur Vortrocknung und Plastifizierung können somit durch die erfindungsgemäße Vorrichtung auf etwa 0,26 kWh/kg PET gesenkt werden. Da der Energieverbrauch nach dem Materialverbrauch der zweitgrößte Kostenanteil bei der Herstellung von Preforms ist, kann somit ein erheblicher Kundennutzen erzielt werden.

Die herkömmlichen Vorrichtungen zur Herstellung von PET-Preforms, weisen Vortrocknungsbehälter auf, die zur Beschränkung der Stellfläche und der isolierten Rohrleitungen über dem Extruder angeordnet sind. Dadurch werden Bauhöhen von 12 bis 15 Metern erreicht. Eine erfindungsgemäße Vorrichtung weist lediglich eine Höhe von 3 bis 4 Metern auf, wodurch die Produktion auch in mehrgeschossigen Gebäuden möglich wird. Zudem ist die lange Dauer der Vortrocknung beim Anfahren herkömmlicher Vorrichtungen zeitraubend und unbequem. Eine erfindungsgemäße Vorrichtung kann fast ohne Vorlaufzeit im wenigen Minuten in Betrieb genommen werden.

Hinsichtlich einer besonders einfachen Ausgestaltung könnte der Doppelschneckenextruder vorzugsweise fünf Prozesszonen aufweisen. Alternativ könnte der Doppelschneckenextruder allerdings auch mehr oder weniger Prozesszonen aufweisen, je nachdem für welche Anwendung die Vorrichtung verwendet wird. In einer, vorzugsweise in der ersten, Prozesszone könnte eine Aufschmelzung des zugefütterten Materials, vorzugsweise zu mindestens 90 %, erfolgen. In dieser Zone könnte dabei das Material, insbesondere ein in Granulatform vorliegendes Material, so schnell wie möglich und schonend erwärmt werden und eine Aufschmelzung des Materials erfolgen.

Ferner könnte zweite und die vierte Prozesszone als Entgasungszone ausgestaltet sein. In dieser Entgasungszone könnte die Schmelze dekomprimiert und auf einer gro-βen Fläche einem ersten Vakuum von beispielsweise weniger als 5 mbar ausgesetzt werden. Hierdurch würde das H₂O und Abbauprodukte, wie der AA-Gehalt, weitgehend, typischerweise zu 80 %, extrahiert werden.

In vorteilhaftern Weise könnte mindestens eine, vorzugsweise die dritte, Prozesszone als Beruhigungszone ausgestaltet sein. Zusätzlich oder alternativ könnte in der als Entgasungszone ausgestalteten, vierten Prozesszone, bei der auf einer großen Fläche ein weiteres Vakuum, das typischerweise kleiner als 5 mbar ist, die restlichen flüchtigen Anteile von ca. 20 % extrahiert werden. Es könnte hierbei mindestens eine Vakuumpumpe und Abscheidetechnik vorgesehen sein, die unter Berücksichtigung der extrahierten Oligomere ausgelegt sein könnten.

Weiterhin könnte in vorteilhafter Weise in einer, vorzugsweise in der fünften, Prozesszone eine Komprimierung der Schmelze erfolgen. Es wäre somit eine Druckaufbauzone realisiert, in der die entgaste Schmelze rekomprimiert werden könnte, um dann dem Transferspeicher zugeführt werden zu können.

Im Rahmen einer besonders einfachen Ausgestaltung, könnte der Doppelschneckenextruder unterfüttert sein.

Die Fütterung des Doppelschneckenextruders könnte in besonders einfacher Weise mittels einer gravimetrischen Dosierung erfolgen. Mittels der gravimetrischen Dosierung könnte dann besonders einfach eine Unterfütterung des Doppelschneckenextruders realisiert werden.

Auch könnte der Doppelschneckenextruder in vorteilhafter Weise gleichsinnig drehend ausgestaltet sein. Hinsichtlich eines einfachen Betriebs wird der Doppelschneckenextruder hierbei kontinuierlich betrieben. Im Hinblick auf die Verarbeitung von ungetrocknetem Material könnte der Doppelschneckenextruder mit hohem Drehmoment bei niedrigen Drehzahlen betreibbar sein.

Überdies könnte in vorteilhafter Weise zwischen dem kontinuierlichen Extrusionsprozess und dem, zyklischen, Spritzgießprozess ein variabler, typischerweise hydraulisch angetriebener Transferspeicher zur Adaption der Betriebsarten angeordnet sein.

Zur Veränderung der Eigenschaften des zu verarbeitenden Materials könnten in einer Prozesszone Zusatzstoffe beimischbar sein. Bei diesen Zusatzstoffen könnte es sich um Füllstoffe, beispielsweise Titandioxid - TiO₂, Talkum, Nanocomposite oder andere Zusatzstoffe handeln, die dazu dienen, die Materialeigenschaften des zu verarbeitenden Materials zu verändern, um beispielsweise einen Schutz vor Photooxidation zu bieten. Ein Beispiel eines solchen Zusatzes sind Oxygen Scavenger, die zur Verbesserung der Barriereeigenschaften zur Verhinderung des Durchtritts von Sauerstoff dient. Ein solcher Oxygen Scavenger ist z.B. auf dem Markt von der Firma ColorMatrix unter dem Namen Amasorb erhältlich. Zusätzlich oder alternativ könnten Additive zugesetzt werden, die z.B. als UV-Stabilisator, als Aufheller oder zur Erhöhung der Viskosität dienen können. Ferner wären Farbzusätze denkbar, die beispielsweise in flüssiger oder in Masterbatch Form vorliegen könnten. Des weiteren wäre der Zusatz von Polyamid - PA - und/oder teilaromatisiertem PA als Aromabarriere möglich. Es sind auch jedwede anderen Stoffe denkbar, die zur Verbesserung der Barriereeigenschaften dienen.

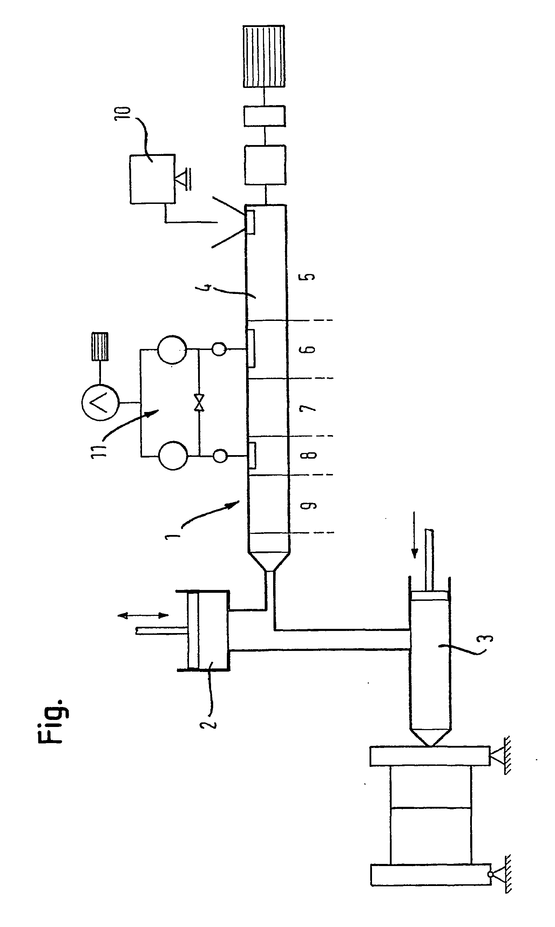

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, und andererseits auf die nachfolgende Erläuterung eines bevorzugten Ausführungsbeispiels der erfindungsgemäßen Vorrichtung zur Herstellung von Spritzgussteilen anhand der Zeichnung zu verweisen. In Verbindung mit der Erläuterung des bevorzugten Ausführungsbeispiels der erfindungsgemäßen Vorrichtung anhand der Zeichnung werden auch im Allgemeinen bevorzugte Ausgestaltungen und Weiterbildungen der Lehre erläutert. In der Zeichnung zeigt die einzige
- Fig.: in einer schematischen Darstellung, ein Ausführungsbeispiel einer erfindungsgemäßen Vorrichtung zur Herstellung von PET-Preforms.

Die Vorrichtung zur Herstellung von Spritzgussteilen in dem in der einzigen Figur gezeigten Ausführungsbeispiel dient zur Herstellung von PET-Preforms. Sie weist einen Extruder 1 auf, der zur Aufbereitung und Plastifizierung von in Granulatform befindlichem Material, in diesem Fall Kunststoff, dient. Die Vorrichtung weist ferner einen Transferspeicher 2 zur Aufnahme von aufbereitetem und plastifiziertem Material auf sowie ein Kolbenaggregat 3 zur Weiterverarbeitung des Materials. Insbesondere in der Kombination des Transferspeichers 2 und des Kolbenaggregats 3 ist eine Umsetzung der in kontinuierlicher Form herstellten Schmelze in ein Spritzgussteil möglich.

In erfindungsgemäßer Weise ist der Extruder 1 als Doppelschneckenextruder 4 ausgestaltet und sind mindestens zwei Prozesszonen 6, 8 als Entgasungszonen ausgestaltet.

Der Doppelschneckenextruder 4 weist fünf Prozesszonen 5, 6, 7, 8, 9 auf, wobei in der ersten Prozesszone 5 eine Aufschmelzung des zugefütterten Materials zu mindestens 90 % erfolgt. Die Zufütterung erfolgt in diesem Ausführungsbeispiel durch eine gravimetrische Dosierung 10, welche eine Unterfütterung des Doppelschneckenextruders 4 in besonders einfacher Weise erlaubt.

Die zweite Prozesszone 6 ist als Entgasungszone ausgestaltet, wobei hier an einer großen Fläche ein erstes Vakuum von ca. 5 mbar angelegt ist, welches mittels einer Vakuumpumpe 11 erzeugt wird. Hierdurch werden H₂O und andere Abbauprodukte, z.B. AA, zu ca. 80 %, extrahiert.

Die Kombination der dritten Prozesszone 7 sowie der vierten Prozesszone 8 als Beruhigungs- und Entgasungszone ermöglicht eine weitere Extraktion von flüchtigen Anteilen in einer Höhe von ca. 20 %. Auch hier wird eine Vakuumpumpe zur Erzeugung und zum Anlegen eines zweiten Vakuums von ca. 5 mbar verwendet. Die Vakuumpumpe und die Abscheidetechnik sind unter Berücksichtigung der extrahierten Oligomere ausgelegt.

In diesem Ausführungsbeispiel ist der Doppelschneckenextruder 4 kontinuierlich und gleichsinnig drehend, wobei der Doppelschneckenextruder 4 mit hohem Drehmoment bei niedriger Drehzahl betrieben wird. Mittels des Kolbenaggregats 3 wird das aufgeschmolzene Material in das Preform-Werkzeug eingeschossen.

Hinsichtlich weiterer Details wird zur Vermeidung von Wiederholungen auf die allgemeine Beschreibung verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Extruder
- 2: Transferspeicher
- 3: Kolbenaggregat
- 4: Doppelschneckenextruder
- 5: Prozesszone 1
- 6: Prozesszone 2
- 7: Prozesszone 3
- 8: Prozesszone 4
- 9: Prozesszone 5
- 10: Gravimetrische Dosierung
- 11: Vakuumpumpe

## Patentansprüche

1. Vorrichtung zur Herstellung von PET-Preforms, mit einem Extruder (1) zur Aufbereitung und Plastifizierung von vorzugsweise in Granulatform befindlichem PET-Materiat, mit einem Kolbenaggregat (3) zum Weiterverarbeiten des PET-Materials, und mit einem PET-Preform-Werkzeug, in das das aufgeschmolzene PET-Material mittels des Kolbenaggregats (3) eingeschossen wird,
**dadurch gekennzeichnet,**
**dass** der Extruder (1) als kontinuierlich betreibbarer Doppelschneckenextruder (4) ausgestaltet ist, dass zur Adaption des kontinuierlichen Extrusionsprozesses an den zyklischen Spritzgießprozess ein Transferspeicher (2) zur Aufnahme von aufbereitetem und plastifiziertem PET-Material vorgesehen ist, dass der Extruder (1) mindestens zwei Prozesszonen aufweist, und dass mindestens zwei Prozesszonen (6, 8) als Entgasungszonen ausgestaltet sind.

2. Vorrichtung nach Anspruch 1, **dadurch gekennzeichnet, dass** der Doppelschneckenextruder (4) vorzugsweise fünf Prozesszonen (5, 6, 7, 8, 9) aufweist

3. Vorrichtung nach Anspruch 1 oder 2, **dadurch gekennzeichnet, dass** die zweite (6) und die vierte (8) Prozesszone als Entgasungszone ausgestaltet sind.

4. Vorrichtung nach einem der Ansprüche 1 bis 3, **dadurch gekennzeichnet, dass** eine, vorzugsweise die dritte (7), Prozesszone als Beruhigungszone ausgestaltet ist.

5. Vorrichtung nach einem der Ansprüche 1 bis 4, **dadurch gekennzeichnet, dass** der Doppelschneckenextruder (4) unterfüttert ist.

6. Vorrichtung nach einem der Ansprüche 1 bis 5, **dadurch gekennzeichnet, dass** eine gravimetrische Dosierung (10) zur Fütterung des Doppeischneckenextruders (4) vorgesehen ist.

7. Vorrichtung nach einem der Ansprüche 1 bis 6, **dadurch gekennzeichnet, dass** der Doppelschneckenextruder(4) gleichsinnig drehend ausgestaltet ist.

8. Vorrichtung nach einem der Ansprüche 1 bis 7, **dadurch gekennzeichnet, dass** der Doppelschneckenextruder (4) mit hohem Drehmoment bei niedrigen Drehzahlen betreibbar ist.

9. Vorrichtung nach einem der Ansprüche 1 bis 8, **dadurch gekennzeichnet, dass** in einer Prozesszone Zusatzstoffe beimischbar sind.

10. Verfahren zur Herstellung von PET-Preforms unter Verwendung einer Vorrichtung nach einem der Ansprüche 1 bis 9, wobei der Doppelschneckenextruder (4) kontinuierlich betrieben wird, wobei PET-Material ohne Vortrocknung in dem Doppelschneckenextruder (4) aufbereitet und plastifiziert wird, wobei in kontinuierlicher Form Schmelze hergestellt wird, wobei die Schmelze mittels des Kolbenaggregats (3) in das Preform-Werkzeug eingespritzt wird, und wobei in den Entgasungszonen Wasser (H₂O)und Acetaledehyd (AA) extrahiert werden.

11. Verfahren nach Anspruch 10, **dadurch gekennzeichnet, dass** in einer Prozesszone Zusatzstoffe zur Verbesserung oder zur Erreichung von Barriereeigenschaften beigemischt werden.

12. Verfahren nach Anspruch 10 oder 11, **dadurch gekennzeichnet, dass** in der ersten Prozesszone (5) eine Aufschmelzung des zugeführten PET-Materials zu mindestens 90% erfolgt.

13. Verfahren nach einem der Ansprüche 10 bis 12, **dadurch gekennzeichnet, dass** in einer Prozesszone nach den Entgaszungszonen die entgaste Schmelze rekomprimiert wird.

14. Verfahren nach einem der Ansprüche 10 bis 13, **dadurch gekennzeichnet, dass** der Doppelschneckenextruder (4) mit hohem Drehmoment bei niedrigen Drehzahlen betrieben wird.

15. Verfahren nach einem der Ansprüche 10 bis 14, **dadurch gekennzeichnet, dass** der Doppelschneckenextruder (4) unterfüttert betrieben wird,

## Claims

1. A device for producing PET preforms, with an extruder (1) for processing and plasticizing PET material preferably in granulate form, with a piston unit (3) for further processing the PET material, and with a PET preform tool, into which the molten PET material is shot in by means of the piston unit (3),
**characterized in that**
the extruder (1) is configured as a continuously operable twin-screw extruder (4), that for adaption of the continucus extrusion process to the cyclic injection moulding profess a transfer reservoir (2) is provided for receiving processed and plasticized PET material, that the extruder (1) has at least two processing zones, and that at least two processing zones (6, 8) are configured as degassing zones.

2. The device according to Claim 1, **characterized in that** the twin-screw extruder (4) preferably has five professing zones (5, 6, 7, 8, 9).

3. The device according to Claim 1 or 2, **characterized in that** the second (6) and the fourth (8) processing zone are configured as degassing zone.

4. The device according to one of Claims 1 to 3, **characterized in that** one, preferably the third (7), processing zone is configured as calming zone.

5. The device according to one of Claims 1 to 4, **characterized in that** the twin-screw extruder (4) is starve fed.

6. The device according to one of Claims 1 to 5, **characterized in that** a gravimetric metering (10) is provided for feeding the twin-screw extruder (4).

7. The device according to one of Claims 1 to 6, **characterized in that** the twin-screw extruder (4) is configured for rotation in the same direction.

8. The device according to one of Claims 1 to 7, **characterized in that** the twin-screw extruder (4) can be operated with high torque at low rotation speeds.

9. The device according to one of Claims 1 to 8, **characterized in that** additives can be admixed in a processing zone.

10. A method for producing PET preforms easing a device according to one of Claims to 9, wherein the twin-screw extruder (4) is operated continuously, wherein PET material is processed and plasticized in the twin-screw extruder (4) without pre-drying, wherein melt is produced in continuous form, wherein the melt is injected into the reform tool by means of the piston unit (3), and wherein water (H₂O) and acetaldehyde (AA) are extracted in the degassing zone.

11. The method according to Claim 10, **characterized in that** additives are admixed in a processing zone to improve or achieve barrier characteristics.

12. The method according to Claim 10 or 11, **characterized in that** in the first processing zone (5) a melting of the fed PET material takes place to at least 90%.

13. The method according to one of Claims 10 to 12, **characterized in that**: in a processing zone after the degassing zones the degassed melt is recompressed.

14. The method according to one of Claims 10 to 13, **characterized in that** the twin-screw extruder (4) is operated with high torque at low rotation speeds

15. The method according to one of Claims 10 to 14, **characterized in that** the twin-screw extruder (4) is operated in a starve fed manner.

## Revendications

1. Dispositif pour fabriquer des préformes PET, comprenant une extrudeuse (1) pour préparer et plastifier du matériau PET présent de préférence sous forme de granulés, comprenant un ensemble de pistons (3) pour continuer de travailler le matériau PET, et un outil à préforme PET dans lequel le matériau PET fondu est injecté au moyen de l'ensemble de pistons (3),
**caractérisé en ce que** l'extrudeuse (1) est formée en tant qu'extrudeuse à double vis sans fin (4) pouvant fonctionner en continu, que pour adapter le procédé d'extrusion continu au procécé de moulage par injection cyclique, un stockage de transfert (2) pour recevoir du matériau PET préparé et plastifié est prévu, que l'extrudeuse (1) présente au moins deux zones de traitement et qu'au moins deux zones de traitement (6, 8) sont formées en tant que zones de dégazage.

2. Dispositif selon la revendication 1, **caractérisé en ce que** l'extrudeuse à double vis sans fin (4) présente de préférence cinq zones de traitement (5, 6, 7, 8, 9).

3. Dispositif selon la revendication 1 ou 2, **caractérisé en ce que** la deuxième (6) et la quatrième (8) zone de traitement sont formées en tant que zones de dégazage.

4. Dispositif selon l'une des revendications 1 à 3, **caractérisé en ce qu'**une zone de traitement, de préférence la troisième (7), est formée en en tant que zone de repos.

5. Dispositif selon l'une des revendications la à 4, **caractérisé en ce que** l'extrudeuse à double vis sans fin (4) est en alimentation réduite.

6. Dispositif selon l'une des revendications 1 à 5, **caractérise en ce qu'**un dosage gravimétrique (10) est prévu pour alimenter l'extrudeuse à double vis sans fin (4).

7. Dispositif selon l'une des revendications 1 à 6, **caractérisé en ce que** l'extrudeuse à double vis sans fin (4) est formée sen tournant dans le même sens.

8. Dispositif selon l'une des revendications 1 à 7, **caractérisé en ce que** l'extrudeuse à double vis sans fin (4) peut fonctionner avec un couple de rotation élevé à une vitesse de votation basse.

9. Dispositif selon l'une des revendications 1 à 8, **caractérisé en ce que** des adjuvants peuvent être incorporés dans une zone de traitement.

10. Procédé de fabrication de préformes PET en utilisant un dispositif selon l'une des revendications 1 à 9, sachant que l'extrudeuse à double vis sans fin (4) est exploitée de manière continue, sachant que du matériau PET est préparé et plastifié dans l'extrudeuse à double vis sans fin (4) sans pré-dessiccation, sachant qu'une masse fondue est produite de forme continue, sachant que la masse fondue est injectée via l'ensemble de pistons (3) dans l'outil à préforme, et sachant que de l'eau (H₂O) et de l'acétaldéhyde (AA) est extrait dans les zones de dégazage.

11. Dispositif selon la revendication 10, **caractérisé en ce que** des adjuvants pour améliorer ou obtenir des propriété barrières sort incorporés dans une zone due traitement.

12. Dispositif selon la revendication 10 ou 11, **caractérisé en ce qu'**une fonte du matériau PET amené s'effectue à au moins 90% dans la première zone de traitement (5).

13. Dispositif selon l'une des revendications 10 à 12, **caractérisé en ce que** la masse fondue dégazée est recomprimée dans une zone de traitement après les zones de dégazage.

14. Dispositif selon l'une des revendications 10 à 13, **caractérisé en ce que** l'extrudeuse à double vis sans fin (4) est employée avec un couple de rotation élevé à une vitesse de rotation basse.

15. Dispositif selon l'une des revendications 10 à 14, **caractérisé en ce que** l'extrudeuse à double vis sans fin (4) est employée en étant en alimentation réduite.
